# EUROPÄISCHE PATENTSCHRIFT

(11) **EP 1 062 861 B1**
(45) Veröffentlichungstag und Bekanntmachung des Hinweises auf die Patenterteilung: **09.01.2008**
(21) Anmeldenummer: 00113389.1
(22) Anmeldetag: 23.06.2000
(51) Int. Cl.: A01F 25/20

(54) **Vorrichtung zum Silageschneiden**
Silage cutting device
Dispositif pour couper le fourrage ensilé

(30) Priorität: 25.06.1999 NL 1012436
(43) Veröffentlichungstag der Anmeldung: 27.12.2000
(73) Patentinhaber: Trioliet Mullos B.V., 7575 BE Oldenzaal (NL)
(72) Erfinder: Van der Plas, Nicolaas, 7576 WB Oldenzaal (NL)
(74) Vertreter: Grünecker, Kinkeldey, Stockmair & Schwanhäusser Anwaltssozietät

(56) Entgegenhaltungen:
- EP-A- 0 359 482
- EP-A- 0 506 158
- EP-A- 0 779 027
- WO-A-95/20869
- DE-U- 29 719 753
- FR-A- 2 634 620
- FR-A- 2 759 536

## Beschreibung

Die Erfindung betrifft eine Vorrichtung gemäß Oberbegriff des Patentanspruchs 1.

Bei der aus FR 2 634 620 A bekannten Vorrichtung zum Silageschneiden sind zwei parallel arbeitende, hydraulische Zylinder vorgesehen. Steuereinrichtungen der den Schneidvorgang ausführenden hydraulischen Zylinder können automatisch synchronisiert sein mit Steuereinrichtungen für hydraulische Knickzylinder zum Verschwenken der Vorrichtung relativ zu einem Tragarm. In der Schneidendstellung sind beide hydraulischen Zylinder ausgefahren.

Bei der aus EP 0 506 158 A bekannten Vorrichtung entspricht der Abstand zwischen der Gelenkachse und dem am weitesten von der Gelenkachse entfernten Teil der Greifvorrichtungen dem Abstand zwischen der Gelenkachse und dem Messer. Die beiden Zylinder, die zum Zusammenführen der ersten und zweiten Rahmenteile für einen Silageschneide-Vorgang angetrieben werden, sind hydraulisch über ein Wegesteuerventil so gesteuert, dass bei Voreilen eines Zylinders dessen Druckbeaufschlagung gedrosselt oder unterbrochen wird, bis beide Zylinder wieder gleich laufen. Dazu sind Sensoren an beiden Seiten des ersten Rahmenteils vorgesehen, die mit den Umsteuerseiten des Wegesteuerventils verbunden sind. Ein Angleichen der Zylinderbewegungen erfolgt erst nach einer vorhergehenden Abweichung bei den Bewegungen der beiden Zylinder, was zu Deformationen oder Querversetzungen an den Rahmenteilen führt, die nachfolgend wieder beseitigt werden. Dies beeinflusst das Schneidergebnis und führt zu unerwünscht hohen Belastungen in der Vorrichtung. Dazu kommt, dass wegen der Abstandsbemessung das Messer gegen Ende des Schneidvorgangs nicht sauber mit den Greifvorrichtungen zusammenwirkt, sondern eine undefinierte Schnittkondition eintritt. Die Rahmenteile müssen extrem robust ausgebildet sein, was zu weiteren Nachteilen führt. Bei einer weiteren Ausführungsform ist wenigstens ein beim Schneiden hin- und her bewegbares Messer vorgesehen, das eine sägende Bewegung ausführt, jedoch unzweckmäßige Dimensionen quer zur Schneidrichtung erfordert.

Weiterer Stand der Technik ist enthalten in DE-U-29 719 753, EP 0 779 027 A, EP 0 359 482 A, FR 2 759 536 A und WO 95120869 A.

Der Erfindung liegt die Aufgabe zugrunde, eine Vorrichtung der eingangs genannten Art zu schaffen, bei der ein stationäres Messer durch die Silage gedrückt wird und dennoch ein verhältnismäßig leichter Rahmen verwendbar ist.

Die gestellte Aufgabe wird mit den Merkmalen des Anspruchs 1 gelöst.

Da sichergestellt ist, dass sich die beiden Rahmenteile an beiden Seiten mit genau gleicher Geschwindigkeit und unabhängig von auftretenden Reaktionskräften aufeinander zu bewegen, lassen sich ohne eine nachteilige Verformung des Rahmens große Schneidkräfte erzeugen. Deshalb können feststehende Messer verwendet werden, die sehr flach bzw. dünn sind und leicht durch die Silage dringen. Durch den relativen Abstand, der zwischen der Schwenkachse und dem Messer einerseits und zwischen der Schwenkachse und dem weitesten Punkt der Greifvorrichtung andererseits bestimmt sind, ergibt sich eine definierte Schnittkondition am Ende des Schneidvorgangs, auch unterstützt durch die exakt gleichlaufenden Zylinder.

Wenn die Zylinder in Reihe geschaltet sind, dann steht die Druckmittelmenge, die dem einen Zylinder zugeführt wird, stets in einem festen Verhältnis zur Druckmittelmenge, die dem anderen Zylinder zugeführt wird. Der eine Zylinder sollte einen kleineren Durchmesser als der andere haben, so dass das Druckmittel, das vom Kolben des einen Zylinders verdrängt wird und an der anderen Kolbenstangenseite des Kolbens des anderen Zylinders wirkt, gleiche Geschwindigkeiten der beiden Zylinder erzeugt.

Sind die Zylinder parallel geschaltet, dann sorgen hydraulische Mittel für den Gleichlauf beider Zylinder, die dann gleich dimensioniert sein können.

Zweckmäßig sind hydraulische Vorrichtungen, die den Höchstdruck in jedem Zylinder oder die Druckdifferenz zwischen beiden Zylindern auf einen eingestellten Wert begrenzen. Dies schützt den Rahmen zusätzlich gegen exzessive Verformungen.

Günstige kinematische Verhältnisse ergeben sich, wenn der Abstand zwischen der Gelenkachse und der Anlenkstelle der Zylinder am ersten Rahmenteil größer ist als die Hälfte des Abstandes zwischen der Gelenkachse und dem Messer. Zweckmäßig ist dieser Abstand sogar größer als zwei Drittel oder sogar als drei Viertel des Abstandes zwischen der Gelenkachse und dem Messer. Der Abstand zwischen der Gelenkachse und der Anlenkstelle jedes Zylinders am ersten Rahmenteil entspricht fast genau dem Abstand zwischen der Gelenkachse und dem Messer, abzüglich der gewünschten Silageschneidtiefe, das heißt der Dicke einer mit dem Messer herausgeschnittenen "Silagescheibe".

Auch am zweiten Rahmenteil ergeben sich günstige kinematische Verhältnisse, wie sie für hohe Schneidkräfte und ein verzugsfreies Schneiden wichtig sind, falls der Abstand zwischen der Gelenkachse und der Anlenkstelle der Zylinder am zweiten Rahmenteil auf jeden Fall größer ist als die Hälfte des Abstandes zwischen der Gelenkachse und den Greifvorrichtungen. Dieser Abstand sollte sogar größer als zwei Drittel und gegebenenfalls sogar als drei Viertel des Abstandes zwischen der Gelenkachse und den Greifvorrichtungen sein.

Die Schnittqualität ist verbessert, wenn am ersten Rahmenteil mindestens ein Seitenmesser vorgesehen ist, das fest an diesem Rahmenteil angebracht und nahezu senkrecht zum querverlaufendem Hauptmesser steht bzw. nahezu radial zur Gelenkachse ausgerichtet ist. Das Messer und die beiden Seitenmesser sind in einer U-Form zueinander angeordnet. Das Seitenmesser kann eine gebogene Schnittfläche haben.

Die Schnittkante des Messers und/oder jedes Seitenmessers kann gerade sein oder bogenförmig vertaufen. Vorzugsweise hat sie einzelne Teile, die zueinander in einem bestimmten Winkel stehen und, z. B. eine gerändelte oder gewellte Schnittkante ergeben. Gute Schneidergebnisse lassen sich mit Messern bzw. Seitenmesser erzielen, bei denen der Abstand nach vorne reichender Punkte der Schnittkante kleiner ist als 8 cm, oder sogar kleiner ist als 6 cm oder noch besser als 4 cm.

Das Messer kann eine Metallplatte sein, an der die Schnittkante durch eine randseitige Abschrägung der Platte gebildet wird. Die Abschrägung sollte sich an der der Gelenkachse abgekehrten Seite befinden, um eine gute Schnittqualität zu erzielen.

Der zweite Rahmenteil ist mit einer oder mehreren Schneidevorrichtungen zur Zusammenarbeit mit dem Messer und/oder den Seitenmessern des ersten Rahmenteils versehen. Wenn sich die Schnittkante jedes Messers am Ende des Schneidvorganges gegen oder nahezu gegen eine dieser Schneidevorrichtungen bewegt, wird die Silage sauber geschnitten.

An einer Kante der Schneidevorrichtung bewegt sich die Schnittkante des Messers oder des Seitenmessers so, dass eine Scherenschneidbewegung oder ein ziehender Schnitt entsteht. Die Schneidevorrichtung kann eine Eintauchrille für die Schnittkante des Messers bzw. der Seitenmesser aufweisen, wobei die Schnittkanten den Grund der Rille nicht zu berühren brauchen, da bereits an den Kanten ein guter Schnitt stattfindet. Die Greifvorrichtungen bilden eine Art Ladeklappe und weisen einen plattenförmigen Teil mit einer scharfen Kante oder Verzahnung auf, die in den Silageblock gedrückt werden kann. Zweckmäßig sind in dem plattenförmigen Teil keine Aussparungen vorhanden, so dass herausgeschnittene Silage auf den plattenförmigen Teil fällt, um danach vollständig in eine Mischkammer der Vorrichtung überführt zu werden.

Wenn der eingangs erwähnte Abstand mindestens 5 cm beträgt, besser jedoch sogar 15 cm, dann befindet sich ein erheblicher Teil der Greifvorrichtung immer noch in der ungeschnittenen Silage, wenn der Schneidvorgang fast abgeschlossen ist. Außerdem kooperieren das Messer und die Seitenmesser sehr wirksam mit den Greifvorrichtungen.

Selbst wenn relativ große Schneidkräfte durch die hydraulischen Zylinder erzeugt werden, assistieren die Führungsmechanismen bei der Bildung eines sauberen Schnittes, weil die Rahmenteile aneinander geführt werden und sich nicht parallel zur Gelenkachse bewegen oder verformen.

Ein Anschlag der Führungsmechanismen lässt das Ende der Messerbewegung genau einstellen. Am Ende eines Schneidvorganges haben sich die Messer, sobald der Anschlag wirksam wird, fast über ihre gesamte Wirklänge bis ganz nahe an die Schneidevorrichtungen bewegt, so dass die gesamte, unter dem Messer befindliche Silage sauber durchtrennt wird.

Die Mischkammer zum Ablegen der hausgeschnittenen Silage wird zu einem Teil vom zweiten Rahmenteil mitgebildet.

Der zweite Rahmenteil ist zweckmäßig mit einem Gelenk kippbar an der Mischkammer angebracht, so dass sich die herausgeschnittene Silage durch Kippen des zweiten Rahmenteils in der Mischkammer ablegen lässt. In der Mischkammer können eine Mischvorrichtung und/oder andere Vorrichtungen zur Silagebearbeitung vorhanden sein.

Alternativ kann der zweite Rahmenteil mit der Mischkammer mehr oder weniger stationär verbunden sein und deren Boden bilden, während der erste Rahmenteil mit einer an Armen schwenkbaren Ladeklappe ausgestattet ist, an deren Kante das Messer befestigt ist. Zur Verbindung der Ladeklappe mit den ersten Rahmenteil kann entweder ein Gelenk oder ein Schiebemechanismus benutzt werden. Das zweite Rahmenteil kann eine annähernd flache Verlängerung des Bodens der Mischkammer bilden, in der die herausgeschnittene Silage abgelegt wird.

Die Vorrichtung wird beim Fahren durch Bodenstützräder unterstützt. Durch eine geeignete Verstellvorrichtung lässt sich die Vorrichtung gegenüber den Rädern in etwa vertikal verstellen. Dies ermöglicht es, die Greifvorrichtungen bis auf den Boden abzusenken und entlang des Bodens bis unter die herauszuschneidende Silage zu drücken. Dies vermeidet Verluste. Zum Transportieren der herausgeschnittenen Silage lässt sich die Vorrichtung auf den Rädern anheben, um gut fahrbar zu sein.

Wird die herausgeschnittene Silage dadurch in die Mischkammer überführt, dass der zweite Rahmenteil mit zwei hydraulischen Zylindern daran schwenkbar ist, dann sollten in den Druckmittelzuführleitungen dieser Zylinder Steuerventile, z. B. Rückschlagventile, vorgesehen sein, um die Länge der beiden Zylinder und damit die jeweilige Schwenkstellung des zweiten Rahmenteils in Relation zur Mischkammer zumindest vorübergehend fixieren zu können.

Ein sauberer Gleichlauf der beiden Zylinder, die die Schneidekräfte zu erzeugen haben und parallel geschaltet sind, wird mittels eines hydraulischen Stromteilers erzielt, der beiden Zylindern untereinander gleiche Druckmittelströme zuführt, unabhängig davon, wie stark gegebenenfalls die Gegenkräfte an beiden Zylindern voneinander differieren. Der Stromteiler hat den Vorteil gegenüber einem Wegesteuerventil, das erst bei Abweichung von einer Gleichlaufkondition angesteuert wird um die Abweichung wieder zu beseitigen, dass es zu keiner Abweichung im Gleichlauf kommt, weil der Stromteiler bei steigendem Gegendruck an einem Zylinder diesen Zylinder ungeachtet des steigenden Gegendrucks mit der gleichen Druckmittelmenge versorgt wie den anderen, so dass keine relative Voreilung entstehen kann.

Um jedoch Schaden von der Vorrichtung abzukehren, falls aus anderen Gründen beispielsweise ein Hindernis an einer Seite der Vorrichtung wirksam würde, sind Druckbegrenzungsventile vorgesehen, die den Höchstdruck in jedem Zylinder und/oder einen maximalen Differenzdruck zwischen den Zylindern begrenzen und so automatisch auf eine Notfallssituation ansprechen.

Bei in Reihe geschalteten Zylindern sollten ebenfalls beide Zylinder von vorgesteuerten Druckbegrenzungsventilen, die Ausgleichsventile definieren, überwacht werden, um im Falle des Auftretens einer Notfallssituation exzessive Drücke abzubauen und Schäden zu vermeiden.

Es ist Teil der Erfindung, die Vorrichtung zum Silageschneiden so zu steuern, dass ein feststehendes Messer am ersten Rahmenteil durch die Silage gedrückt wird, bis die Silage schließlich gegen Greifvorrichtungen des zweiten Rahmenteils vollständig durchgeschnitten wird. Die Schneidkräfte werden mit zwei beabstandeten Zylindern erzeugt, die so gesteuert werden, dass sie stets die gleiche Länge haben und auf diese Weise ein Verziehen des Rahmens der Vorrichtung oder Deformationen vermeiden. Zu diesem Zweck werden die beiden Zylinder hydraulisch so gesteuert, dass sie unabhängig von ihrem individuellem Gegendruck jeweils mit der gleichen Geschwindigkeit bewegt werden bzw. untereinander stets die gleiche Länge haben.

Da bei Parallelschaltung der Zylinder und Zuteilung der Druckmittelströme zu den Zylindern über den Stromteiler fertigungs- bzw. funktionsbedingte Toleranzen keine 100%ige Aufteilung gewährleisten, insbesondere über bis zu 2000 mm und mehr betragende Zylinderhübe, kann es zweckmäßig sein, beim Silageschneiden dem Stromteiler stromab ein Kompensations-Regelventil zuzuordnen, das den Strom zum jeweils gegen den niedrigeren Gegendruck arbeitenden Zylinder auf der Zuströmseite drosselt, ggfs. bis zur vollständigen Absperrung. Dies erlaubt zumindest beim Silageschneiden einen weitgehend idealen Gleichlauf.

Alternativ kann der beim Silageschneiden gegen niedrigeren Gegendruck arbeitende Zylinder an seiner Abströmseite bewusst vorgespannt oder gebremst werden, und zwar entweder über ein durch ein Differenzdruck-Kompensations-Steuerventil verstelltes Bremsventil in der zur gemeinsamen Abflussleitung führenden Absperr-Leitung des jeweiligen Zylinders, oder durch ein direkt an die Abström-Leitungen angeschlossenes Kompensations-Steuerventil, oder durch direkt in den Abströmleitungen angeordnete, überkreuz aus den Arbeitsleitungen gesteuerte Vorspann-Regelventile. Einriffe von den Abströmseiten der Zylinder haben bei der Gleichlaufsteuerung den Vorteil, nur kleine Druckmittelvolumina oder relativ niedrige Drücke beherrschen zu müssen.

Anhand der Zeichnung werden Ausführungsformen des Erfindungsgegenstandes sowie eingangs ein konventioneller bzw. bekannter Antriebsmechanismus erläutert. Es zeigen:
- Fig. 1: ein bekanntes Hydraulikschema einer Silageschneidvorrichtung, in Neutralstellung bzw. nach Durchführen eines Schneidvorgangs.
- Fig. 2: ein Hydraulikschema eines erfindungsgemäßen Antriebsmechanismus für eine Silageschneidvorrichtung,
- Fig. 3: eine andere Ausführungsform eines Hydraulikschemas eines erfindungsgemäßen Antriebsmechanismus,
- Fig. 4: eine weitere Ausführungsform eines Hydraulikschemas eines erfindungsgemäßen Antriebsmechanismus,
- Fig. 5-7: eine erste Ausführungsform einer Silageschneidevorrichtung, in einer Schneidbereitschaftsstellung, in einer Stellung am Ende eines Schneidvorgangs, und in einer Transportstellung,
- Fig. 8-11: vergrößerte Teildarstellungen zu der Ausführungsform der Fig. 5 bis 7,
- Fig. 12-15: eine weitere Ausführungsform einer Silageschneidvorrichtung in einer Schneidbereitschaftsstellung, in einer Stellung am Ende eines Schneidvorgangs, in einer Überführungsstellung für die herausgeschnittene Silage, und in einer Transportstellung,
- Fig. 16-18: eine weitere Ausführungsform einer Silageschneidvorrichtung, in einer Stellung am Ende eines Schneidvorgangs und in einer Transportstellung, und
- Fig. 19-21: eine weitere Ausführungsform einer Silageschneidvorrichtung in einer Schneidbereitschaftsstellung, in einer Stellung am Ende eines Schneidvorgangs, und in einer Transportstellung.
- Fig. 22-25: weitere Hydraulikschemata für erfindungsgemäße Antriebsmechanismen einer Silage-Schneidvorrichtung, jeweils in einer drucklosen Neutralstellung.

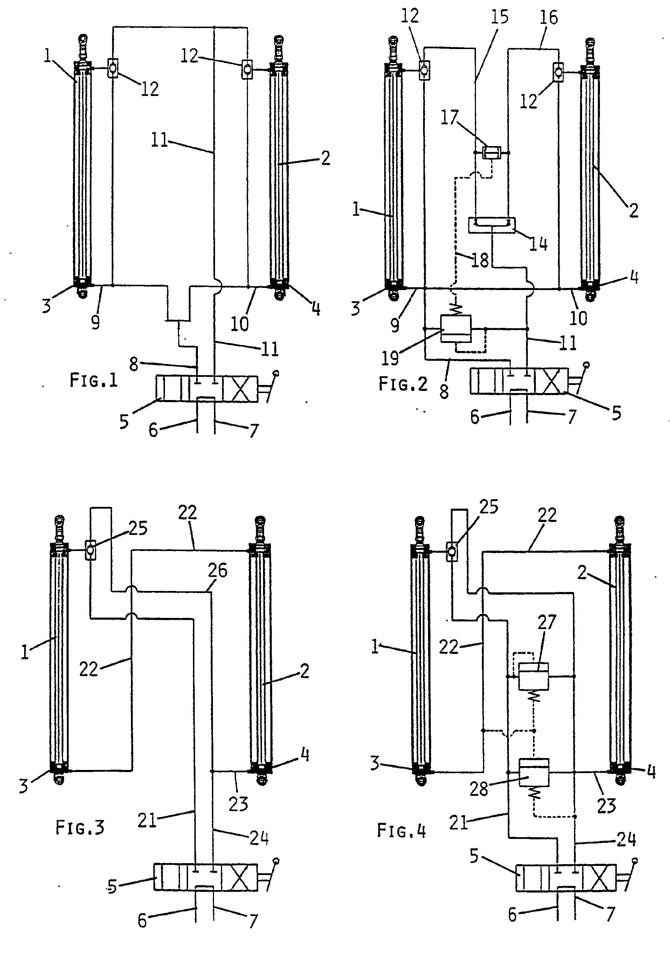

In Fig. 1 sind zwei hydraulische Zylinder 1 und 2 eines bekannten Hydrauliksystems gezeigt, die zwischen zwei Rahmenteilen einer Vorrichtung zum Silageschneiden (nicht gezeigt) angeordnet sind, um diese beiden Rahmenteile um eine gemeinsame Gelenkachse zu bewegen. Die beiden Zylinder 1 und 2 sind in ihrer eingefahrenen Stellung am Ende eines Schneidvorgangs gezeigt, in der Kolben 3 und 4 in den Zylindern 1 und 2 vollständig eingefahren sind. Zum Einstellen einer Schneidbereitschaftsstellung werden die Kolbenstangen des Kolben 3, 4 ausgefahren, beim Schneidvorgang werden die Kolbenstangen bis in die gezeigte Stellung eingefahren. Die Zylinder 1 und 2 werden durch das Steuerventil 5 betätigt, das bei der gezeigten Ausführungsform ein 4/3-Wegesteuerventil zwischen einer Zufuhrleitung 6 und einer Abflussleitung 7 einerseits sowie Arbeitsleitungen 8, 11 andererseits ist. Die Arbeitsleitung 8 zweigt sich in Leitungen in 9 und 10 zu den kolbenseitigen Kammern der Zylinder 1, 2 auf, wobei von den Leitungen 9, 10 jeweils eine Zweigleitung über ein Wechselventil 12 auch zur anderen Arbeitsleitung 11 führt. Von den Wechselventilen 12 führen Anschlussleitungen zu den kolbenstangenseitigen Kammern der Zylinder 1, 2.

Wird das Steuerventil 5 nach rechts verstellt, dann ist die Zuführleitung 6 über die Arbeitsleitung 8 und die Leitungen 9, 10 mit den kolbenseitigen Zylinderräumen unter den Kolben 3, 4 verbunden. Die Kolben 3, 4 werden nach oben verschoben. Die Wechselventile 12 werden in ihre obere Stellung gedrückt, so dass das von dem Kolben 3, 4 ausgeschobene Druckmittel nach unten in die Leitungen 9, 10 gedrückt wird und die Ausschiebebewegung der Kolbenstangen beschleunigt. Auf diese Weise gerät der nicht gezeigte erste Rahmen schneller in die Schneidbereitschaftsstellung.

Wird nachstehend das Wegesteuerventil 5 nach links verstellt, dann ist die Zufuhrleitung 6 mit der Arbeitsleitung 6 verbunden, während die Arbeitsleitung 8 zur Abflussleitung 7 offen ist. Die Wechselventile 12 werden in ihre unteren Stellungen gedrückt, so dass das Druckmittel in die kolbenstangenseitigen Kammern der Zylinder 1, 2 oberhalb der Kolben 3, 4 gelangt. Die Kolben 3, 4 fahren nach unten. Das ausgeschobene Druckmittel strömt über die Leitungen 9, 10 und die Arbeitsleitung 8 in die Abflussleitung 7. Dabei wird Silage herausgeschnitten. Die Wechselventile 12 enthalten Kugeln, die durch den höheren Druck gegen jeweils einen Ventilsitz gedrückt werden und in dieser Strömungsrichtung sperren. Da die individuelle Gegenkraft an jedem Zylinder 1, 2 von der Gegenkraft am anderen Zylinder unterschiedlich sein kann und das Druckmittel aus der Arbeitsleitung 8 den Weg des geringeren Widerstands nimmt, wird der stärker belastete Zylinder 1, 2 zurückbleiben, während der weniger belastete Zylinder 1, 2 schneller fährt. Daraus resultiert ein Verziehen des Rahmens der Vorrichtung oder eine unerwünschte Deformation. Diesem Nachteil wird durch eine übermäßig stabile Ausführung des Rahmens Rechnung getragen, wobei allerdings die Schnittqualität, insbesondere gegen Ende eines Schneidvorgangs, erheblich verschlechtert werden kann.

Fig. 2 zeigt ein Hydraulikschema für eine Silageschneidvorrichtung gemäß der Erfindung, bei dem ein Unterschied der Längen, die die beiden Zylinder 1, 2 bei der Abwärtsbewegung der Kolben 3, 4 haben, hydraulisch vermieden wird.

Die Verschaltung des Wegesteuerventils 5 mit den Leitungen 6, 7 und den Arbeitsleitungen 8, 11 im Bereich des Wegesteuerventils entspricht der vorbeschriebenen. Unterschiedlich ist zunächst ein zwischen den Arbeitsleitungen 8, 11 vorgesehenes Ausgleichsventil 19, das als in Strömungsrichtung von der Arbeitsleitung 11 zur Arbeitsleitung 8 vorgesteuertes, in Zusteuerrichtung federbelastetes Druckbegrenzungsventil ausgebildet ist. Zusätzlich kann das Ausgleichsventil 19 über eine Pilotleitung 18 mit Vorsteuerdruck im Zusteuersinn beaufschlagt werden. Die beiden, von den Leitungen 9, 10 abzweigenden und über die Wechsel-Ventile 12 geführten Leitungen werden nicht direkt mit der Arbeitsleitung 11 verbunden, sondern sind über Leitungszweige 15, 16 an zwei getrennte Anschlüsse eines Stromteilers 14 angeschlossen, dessen Mittenanschluss mit der Arbeitsleitung 11 verbunden ist. Zusätzlich ist zwischen den Leitungszweigen 15, 16 ein Differenzdruckventil 17 vorgesehen, das an einem Mittenanschluss die Pilotleitung 18 speist.

Wird das Wegesteuerventil 5 nach links verstellt (Schneidstellung) dann ist die Zuführleitung 6 über die Arbeitsleitung 11 mit dem Eingang des Stromteilers 14 verbunden. Der Stromteiler teilt den Zweigleitungen 15, 16 untereinander gleiche Druckmittelströme zu, die bei nach unten gedrückten Wechselventilen 12 die kolbenstangenseitigen Kammern oberhalb der Kolben 3, 4 der Zylinder 1, 2 beaufschlagen. Die gleichen Druckmittelströme werden unabhängig davon zugeteilt, ob die Reaktionskräfte an den Zylindern gleich sind oder unterschiedlich. Dies bedeutet, dass sich beide Kolben 3, 4 synchron bewegen und die beiden Zylinder 1, 2 stets die gleiche Länge haben. Dadurch wird ein Verziehen des Rahmens oder eine geneigte Lage des Messers der Silageschneidvorrichtung vermieden. Sollte der individuelle Widerstand an einem der Zylinder aus irgendeinem Grund übergroß werden (Gefahr einer schädlichen Deformation des Rahmens der Vorrichtung), dann spricht das Differenzdruckventil 17 an, das die Drücke in den beiden Zweigleitungen 15, 16 permanent vergleicht. Bei einem einstellbaren Wert des Differenzdrucks zwischen den beiden Zweigleitern 15, 16 wird über die Pilotleitung 18 ein Signal an das Ausgleichsventil 19 übertragen, so dass dieses auf Durchgang verstellt wird und die Arbeitsleitung 11 zur Arbeitsleitung 8 und damit zur Abflussleitung 7 freigibt. Es wird Druckmittel aus der Arbeitsleitung 11 abgelassen, um eine vorbestimmte Druckdifferenz nicht zu überschreiten. Die Druckdifferenz kann auf beispielsweise höchstens 50 bar begrenzt sein.

In Fig. 3 sind die beiden hydraulischen Zylinder 1, 2 in Reihe geschaltet. Dieses System wird auch als "master and slave" bezeichnet, wobei hier der Zylinder 1 der "master" ist, dessen Bewegung beim Einfahren des Kolbens 3 automatisch vom Kolben 4 im Zylinder 2, dem "slave" kopiert wird. Das Wegesteuerventil 5 versorgt wechselweise eine von zwei Arbeitsleitungen 21, 24 mit Druckmittel aus der Zuführleitung 6, während die jeweils andere Arbeitsleitung mit der Abflussleitung 7 verbunden ist. Die Arbeitsleitung 21 führt zu einem Wechselventil 25, von dessen Mittenanschluss der kolbenstangenseitige Raum oberhalb des Kolbens 3 den Zylinder 1 beaufschlagt wird. Der kolbenseitige Raum unterhalb des Kolbens 3 des Zylinders 1 ist über eine Leitung 22 mit dem kolbenstangenseitigen Raum des Zylinders 2 oberhalb des Kolbens 4 verbunden. Die Arbeitsleitung 24 führt zum oberen Anschluss des Wechselventils 25 und über eine Zweigleitung 23 zum kolbenseitigen Raum unterhalb des Kolbens 4.

Sobald das Wegesteuerventil 15 nach rechts verstellt wird, ist die Zuführleitung 6 mit der Arbeitleitung 26 verbunden, während die Arbeitsleitung 24 mit der Abflussleitung 7 verbunden ist. Das Wechselventil 25 wird nach oben gedrückt, so dass das Druckmittel aus der Arbeitsleitung 21 den kolbenstangenseitigen Raum oberhalb des Kolbens 3 des Zylinders 1 beaufschlagt. Das vom Kolben 3 ausgeschobene Druckmittel wird über die Leitung 22 dem kolbenstangenseitigen Raum oberhalb des Kolbens 4 des Zylinders 2 zugeführt. Das vom Kolben 4 ausgeschobene Druckmittel wird über die Zweigleitung 23 und die Arbeitsleitung 24 zur Abflussleitung 7 geführt.

Die Zylinder 1 und 2 sind unterschiedlich dimensioniert. Die aktive Querschnittfläche des Kolben 3 in der kolbenseitigen Kammer des Zylinders 1 ist genauso groß wie die aktive Querschnittsfläche im kolbenstangenseitigem Raum des Zylinders 2 oberhalb des Kolbens 4. Die aktive Beaufschlagungsfläche des Kolbens 3 in dem kolbenstangenseitigem Raum ist kleiner als die aktive Querschnittsfläche im kolbenseitigen Raum des Zylinders 1. Dadurch bewegen sich die beiden Zylinder 1, 2 beim Einfahren der Kolben 3, 4 mit gleicher Geschwindigkeit.

Wird das Wegesteuerventil 5 nach links verstellt, dann ist die Zufuhrleitung 6 über die Arbeitsleitung 24 und die Zweigleitung 23 mit der kolbenseitigen Kammer unterhalb des Kolbens 4 des Zylinders 2 verbunden. Der Kolben 4 wird nach oben verstellt. Das vom Kolben 4 ausgeschobene Druckmittel wird über die Leitung 22 unter den Kolben 3 des Zylinders 1 geleitet, so dass sich auch der Kolben 3 nach oben bewegt, und zwar mit der gleichen Geschwindigkeit wie der Kolben 4. Das Ventil 25 (Wechselventil) verhindert bei nach links verstelltem Wegesteuerventil 5 und bei der Aufwärtsbewegung der Kolben 3, 4, dass den Zylinder 1 verlassendes Druckmittel nicht über die Leitung 21 abströmt, sondern über die Leitungen 26 und 23 in den Zylinder 2 abgeleitet wird, wodurch eine schneller Bewegung beider Zylinder 1, 2 erfolgt.

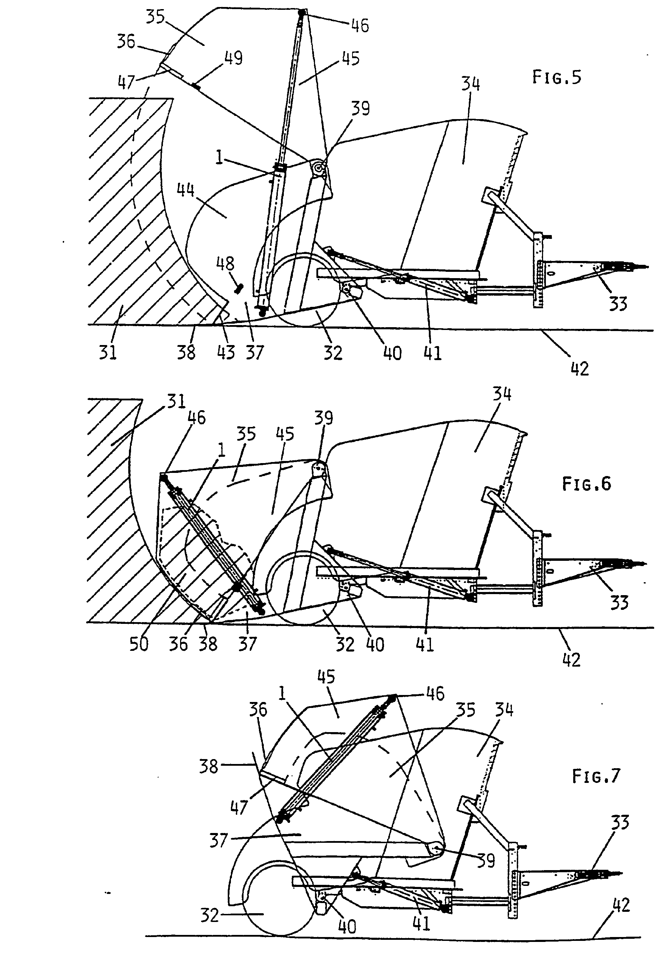

In der Ausführungsform in Fig. 4 (unterschiedlich dimensionierte Zylinder 1, 2) sind zusätzlich zu der Ausführungsform von Fig. 3 zwei Ausgleichsventile 27, 28 vorgesehen die als Druckbegrenzungsventile ausgebildet sind, und verhindern, dass die von jedem Zylinder ausgeübte Kraft zu groß werden kann. Die beiden Ausgleichsventile 27, 28 sind z. B. auf einen Höchstdruck von 100 bar eingestellt.

Das Ausgleichsventil 27 ist von der Seite der Arbeitsleitung 21 her in Aufsteuerrichtung vorgesteuert und wird in Zusteuerrichtung von einer Feder beaufschlagt. Zusätzlich ist eine Pilotleitung vorgesehen, die von der Leitung 22 abzweigt und an die Zusteuerseite des Ausgleichsventils 27 angeschlossen ist Sobald der Druck in der Arbeitsleitung 21 die beispielsweise eingestellten 100 bar erreicht, verbindet das Ausgleichsventil 27 die Arbeitsleitung 21 mit der Arbeitsleitung 24 und damit der Abflussleitung 7. Das Ausgleichsventil 28 wird in Zusteuerrichtung durch eine Feder belastet und zusätzlich durch eine Pilotleitung aus der Arbeitsleitung 24 beaufschlagt. Die von der Leitung 22 abzweigende Pilotleitung (gestrichelt angedeutet) beaufschlagt das Ausgleichsventil 28 in Aufsteuerrichtung. Sobald der Druck der Leitung 22 einen eingestellten Grenzwert (z.B. Kraft der Feder am Ausgleichsventil 28) erreicht, öffnet das Ausgleichsventil 28 eine Strömungsverbindung, über die Druckmittel abfließen kann.

Eine erfindungsgemäße Vorrichtung zum Silageschneiden gemäß Fig. 5 bis 7 ist auf Bodenstützrädern 32 fahrbar und mittels einer Deichsel 33 an einen Schlepper anhängbar. Die Silage liegt in Form eines Silagestocks oder Silageblocks 31 vor.

In der Vorrichtung ist eine Mischkammer 34 zum Ablegen herausgeschnittener Silage zu Transportzwecken vorgesehen. In der Mischkammer 34 sind Mischvorrichtungen enthalten, mit denen die Silage gelockert oder mit anderen Futterbestandteilen gemischt wird. Die Silage 31 wird mit Hilfe eines Rahmens ausgeschnitten, der einen ersten Rahmenteil 35 mit einem stationären Messer 36 und einen zweiten Rahmenteil 37 umfasst, der mit Greifvorrichtungen 38 versehen ist, die beim Ausschneiden in den Silageblock eingreifen. Der erste Rahmenteil 35 ist um eine Gelenkachse 39 am zweiten Rahmenteil 37 schwenkbar. Der zweite Rahmenteil 37 ist um eine Gelenkachse 40 mit dem die Mischkammer 34 enthaltenden Teil der Vorrichtung verbunden.

Der erste Rahmenteil 35 lässt sich mittels der Zylinder 1, 2 (Zylinder 2 ist nicht sichtbar) relativ zum zweiten Rahmenteil 34 bewegen. Weitere hydraulische Zylinder 41 ermöglichen es, den zweiten Rahmenteil 37 mit dem daran angeordneten ersten Rahmenteil 35 relativ zur Mischkammer 34 zu verstellen.

In Fig. 5 ist die Vorrichtung in schneidbereiter Lage rückwärts zum Siloblock 31 gefahren. Der zweite Rahmenteil 37 ist relativ zur Mischkammer 34 mittels der Zylinder 41 soweit nach unten geschwenkt, dass die Greifvorrichtungen 38 den Boden 42 berühren. Die Greifvorrichtungen 38, z. B. eine flache Metallplatte, sind auf dem Boden 42 unter den Silageblock 31 geschoben.

Nun wird der erste Rahmenteil 35 mittels der Zylinder 1, 2 um die Gelenkachse 39 nach unten geschwenkt, so dass das Messer 36 entlang der gestrichelten Linie in Fig. 5 durch die Silage in die Position von 6 gedrückt wird. Anschließend wird der zweite Rahmenteil 37 mittels der Zylinder 41 zusammen mit den ersten Rahmenteil 35 um die Gelenkachse 40 verschwenkt, bis die herausgeschnittene Silage in die Mischkammer 34 fällt (Fig. 7). Der zweite Rahmenteil 37 bildet dabei einen Teil der Wandung der Mischkammer 34.

Der zweite Rahmenteil 37 besteht aus den plattenförmigen Greifvorrichtungen 38 und einem daran anschließenden flachen Teil, auf dem die Silage nach dem Herausschneiden abgelegt wird. Der zweite Rahmenteil 37 besitzt Seitenwände 44. Der erste Rahmenteil 35 besteht aus einer u-förmig gebogenen Platte, wobei das Messer 36 an der Basis des U's befestigt ist. Die Platte, an der sich Anlenkstellen 46 für die Zylinder 1, 2 befinden und mit der der Rahmenteil 35 am zweiten Rahmenteil 37 über die Gelenkachse 39 verbunden ist, bildet zwei Seitenwände 45.

An jeder Seitenwand 45 ist ein Seitenmesser 47 vorgesehen, das im wesentlichen senkrecht zum Messer 36 steht. Beide Seitenwände 44 des zweiten Rahmenteils 37 sind mit einer Schneidevorrichtung 43 versehen, auf die sich jedes Seitenmesser 47 zubewegt, wenn Silage geschnitten wird. Jeweils ein Anschlag 48 dient zum Begrenzen der Bewegung des ersten Rahmenteils 35 relativ zum zweiten Rahmenteil 37. Ein Führungsmechanismus 49 des ersten Rahmenteils 35 gerät gegen den Anschlag 48, sobald der Schneidvorgang abgeschlossen ist.

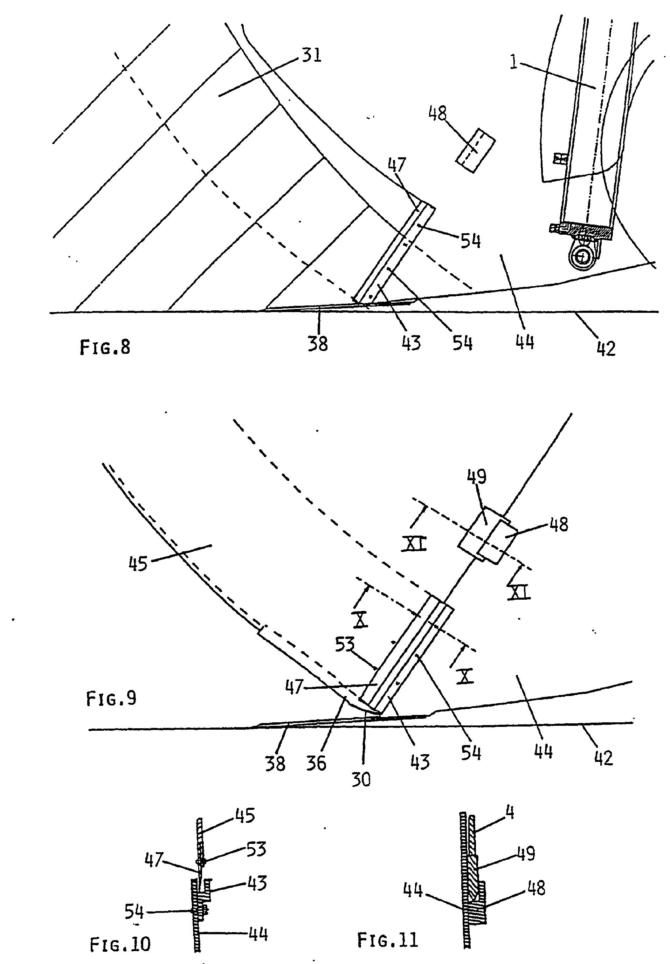

In Fig. 6 ist der Schneidvorgang für ein Silagestück 50 abgeschlossen. Das Silagestück wird durch Verstellen der Rahmenteile 35, 37 um die Gelenkachse 40 in der Mischkammer 34 abgelegt (Fig. 7). Leitungen, in denen das Druckmittel zu den Zylindern 41 zum Verschwenken der ersten und zweiten Rahmenteile 35, 37 zuströmt bzw. abströmt, sind mit gesteuertem bzw. entsperrbaren Rückschlagventilen versehen, um den zweiten Rahmenteil 37 relativ zur Mischkammer 34 vorübergehend in einer bestimmten Stellung fixieren zu können. In Fig. 8 und 9 reichen die plattenförmigen Greifvorrichtungen 38 bis unter den Silageblock 31. Die Schneidevorrichtung 43 an der Seitenwand 44 des zweiten Rahmenteils 37 arbeitet mit dem Seitenmesser 47 an der Seitenwand 45 des ersten Rahmenteils 35 zusammen. Da die Schnittkante des Seitenmessers 47 bis zur Schneidevorrichtung 43 bewegt wird, wird die dazwischen befindliche Silage abgeschnitten.

In Fig. 8 ist das plattenförmig ausgebildete Messer mit seiner Schnittkante zu erkennen, die durch eine Abschrägung 30 an der der Gelenkachse 39 abgekehrten Seite des Messers 36 gebildet wird.

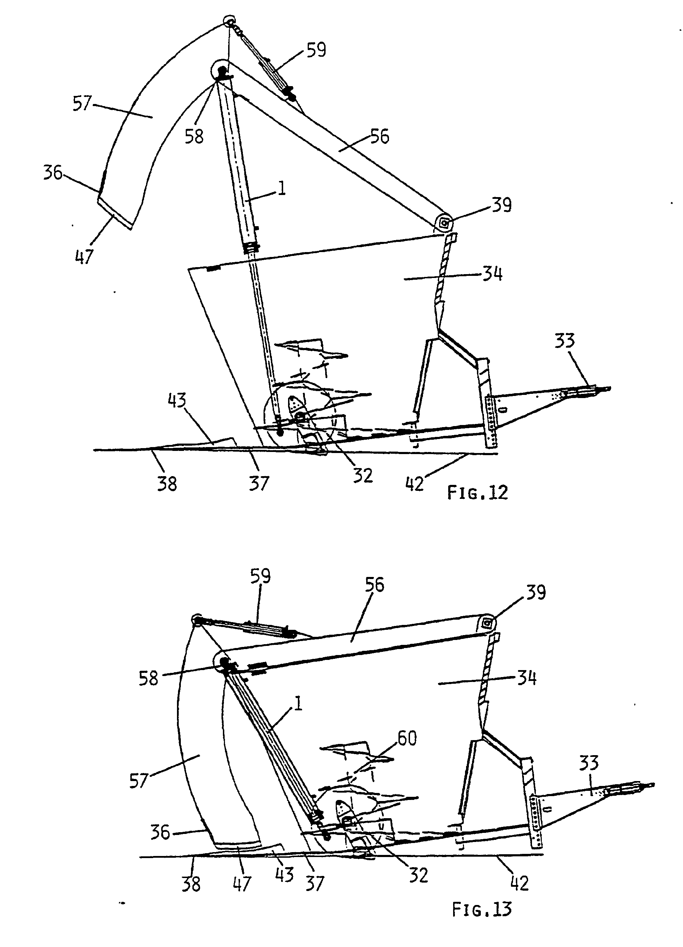

In Fig. 10 (Schnitt in der Ebene X-X von Fig. 9) ist zu erkennen, wie das Seitenmesser 47 mit Schrauben 53 an der Seitenwand 45 befestigt ist und am Ende des Schneidvorgangs in eine Rille eingetaucht ist, die sich zwischen der Schneidevorrichtung 43 und der Seitenwand 44 befindet. Die Schneidevorrichtung 43 ist mit Schrauben 54 an der Seitenwand 44 befestigt. Mit Hilfe der Rille lässt sich die Silage effektiver durchschneiden. Die Schnittfunktion in diesem Bereich lässt sich gegebenenfalls dadurch verbessern, dass die Schnittkante des Seitenmessers 47 mit einem Rand der Rille zusammenarbeitet, so dass in etwa eine Scherenschneidefunktion eintritt.

Gemäß Fig. 11 ist die Seitenwand 44 mit dem Anschlag 48 versehen, der mit dem Führungsmechanismus 49 an der Seitenwand 45 zusammenarbeitet. Die Seitenwand 45 des ersten Rahmenteils 35 wird an der Außenseite der Seitenwand 44 des zweiten Rahmenteils 37 entlang geschoben. Der Führungsmechanismus 49 sorgt dabei dafür, dass eine planmäßige Führung eintritt und keine Querbewegungen auftreten, und dass der Bewegungshub begrenzt wird, sobald der Führungsmechanismus 49 an den Anschlag 48 stößt. Dieser Zustand ist in Fig. 11 als Querschnitt in der Schnittebene XI-XI von Fig. 9 dargestellt. Der Anschlag 48 ist so eingestellt, dass er den Bewegungshub bereits begrenzt, ehe die Schneidkante der Seitenmesser 47 auf den Grund der Rille stößt.

Bei einer zweiten Ausführungsform der Fig. 12 bis 15 ist der zweite Rahmenteil 37 mit seinen Greifvorrichtungen 38 fest mit der Mischkammer 34 verbunden. Der zweite Rahmenteil 37 bildet eine Verlängerung des Bodens der Mischkammer 34. In diesem Ausführungsbeispiel besteht der erste Rahmenteil aus je einem Arm 56 und einer um eine Gelenkachse 58 schwenkbaren und mit dem Arm 56 verbundenen Ladevorrichtung 57 mit der Form einer Ladeklappe, an der das Messer 36 und die Seitenmesser 47 befestigt sind. Die Seitenmesser 47 sind an ihren Schneidkanten gewölbt, wobei sich die Gelenkachse 58 im Mittelpunkt der Wölbung befindet. Die Schneidevorrichtung 43 ist entsprechend gewölbt (ziehender Schnitt).

Die Arme 56 werden mittels der Zylinder 1, 2 um die Gelenkachse 39 relativ zur Mischkammer 34 verschwenkt. Die Ladeklappe bzw. Ladevorrichtung 57 lässt sich um eine Schwenkstelle 58 an den Enden der Arme 56 mittels zweier Zylinder 59 verschwenken.

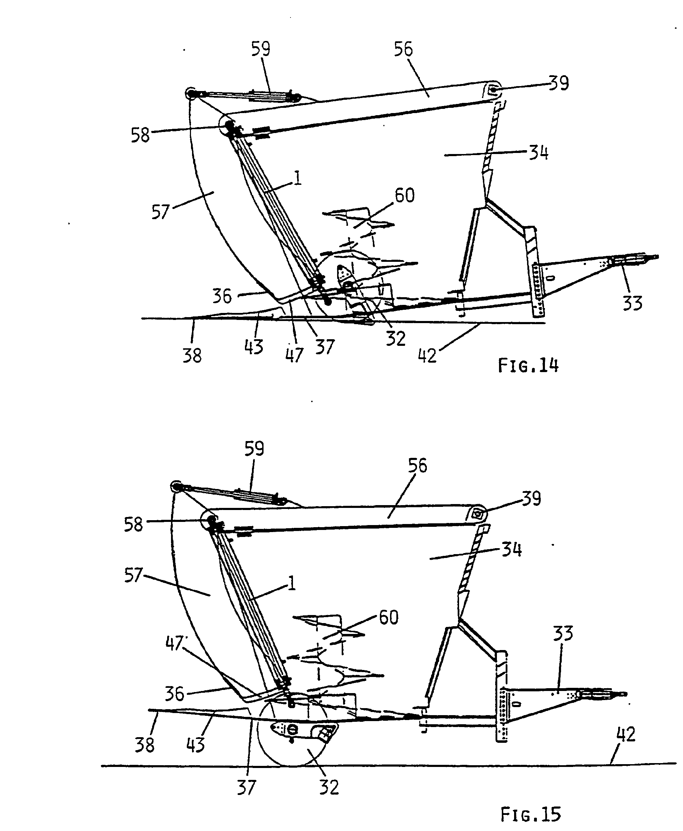

Beim Herausschneiden der Silage sind die Zylinder 59 zunächst auf eine bestimmte Länge eingestellt. Dabei bewegt sich der erste Rahmenteil aus den Armen 56 und der Ladeklappe 57 aus der in Fig. 12 gezeigten Position in die in Fig. 13 gezeigte Position. Danach wird die Ladevorrichtung 57 mittels der Zylinder 59 (gegebenenfalls ist nur ein Zylinder 59 in der Mitte vorgesehen) in die in Fig. 14 gezeigte Lage geschwenkt, wobei die herausgeschnittene Silage in die Mischkammer 34 gelangt und mit Hilfe einer Mischvorrichtung 60 mit anderen Bestandteilen gemischt werden kann. Dabei bildet die Ladevorrichtung 57 einen Teil der Seitenwand der Mischkammer 34.

Gemäß Fig. 15 kann die Vorrichtung durch Verstellen der Bodenstützräder 32 in annähernd vertikaler Richtung angehoben werden. Danach kann die Vorrichtung an einen Schlepper angehängt und abtransportiert werden.

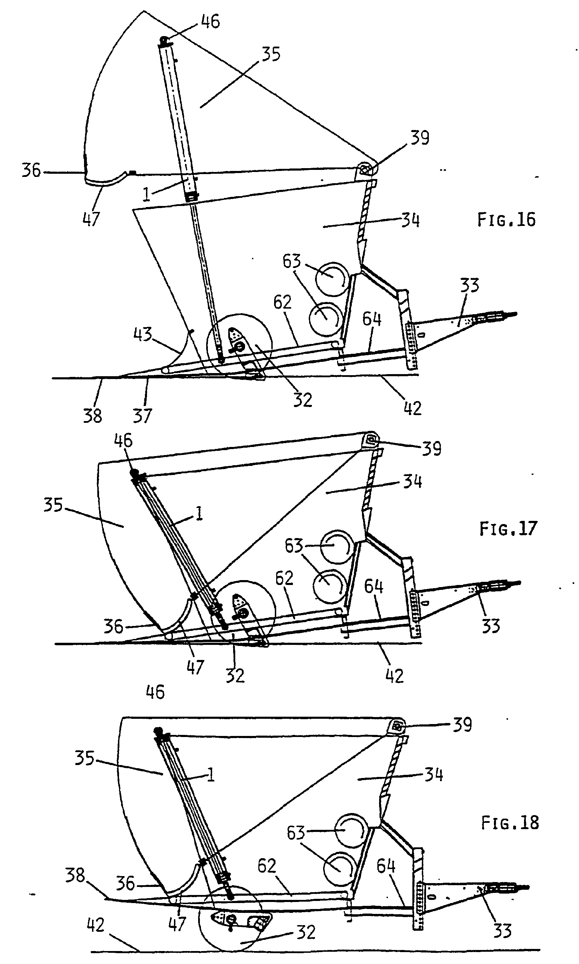

In der dritten Ausführungsform der Fig. 16 bis 18 der Vorrichtung zum Silageschneiden ist wie bei der zweiten Ausführungsform der die Greifvorrichtungen 38 und die Schneidevorrichtung 43 aufweisende zweite Rahmenteil 37 fest mit der Mischkammer 34 verbunden. Der erste Rahmenteil 35 besteht jedoch nicht aus relativ zueinander beweglichen Teilen, sondern kann mittels der Zylinder 1, 2 als Gesamtheit um die Gelenkachse 39 an der Mischkammer 34 verschwenkt werden. Die Gelenkachse 39 befindet sich oben an der Mischkammer 34.

In der Mischkammer 34 ist am Boden eine Transportvorrichtung 62 vorgesehen, mit welcher abgelegte Silage in der Mischkammer 34 nach vorne in Richtung zweier Dosierwalzen 63 gefördert werden kann, die die Silage dosiert auf einem Transportband 64 ablegen, um sie in seitlicher Richtung aus der Vorrichtung abzutransportieren.

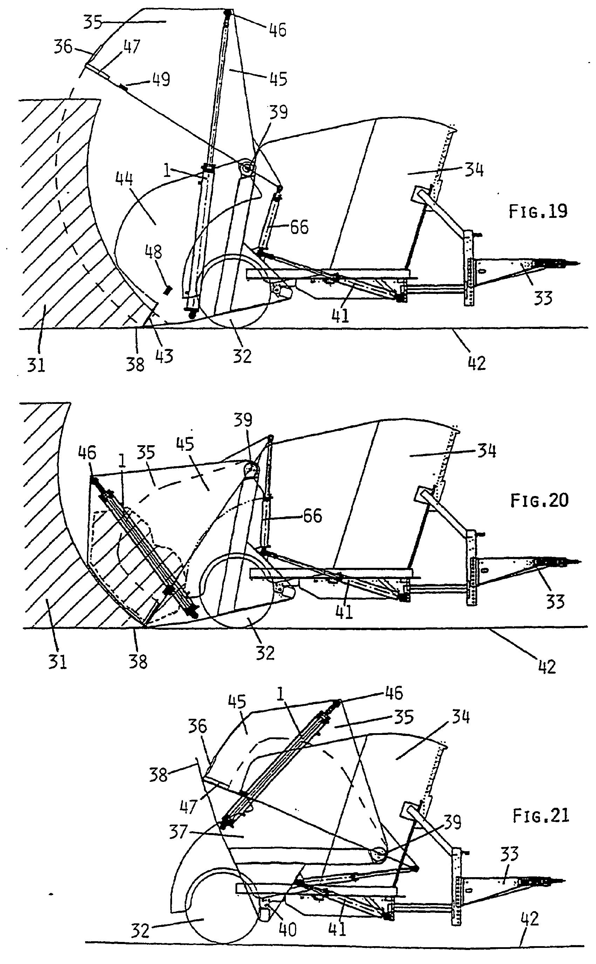

Bei der vierten Ausführungsform der Vorrichtung zum Silageschneiden der Fig. 19 bis 21 ist eine Abweichung vom ersten Ausführungsbeispiel gegeben, da an beiden Seiten der Vorrichtung zusätzlich je ein hydraulischer Zylinder 66 vorgesehen ist. Die ersten und zweiten Rahmenteile 35 und 37 werden mittels der Zylinder 1, 2 zum Schneiden der Silage scherenartig zueinander bewegt. Dabei assistieren die beiden Zylinder 66 mit zusätzlichen Schubkräften, um die Schnittkraft zu vergrößern. Jeder Zylinder 66 greift an einer über die Gelenkachse 39 an der dem Messer 36 abgewandten Seite hinausragenden Verlängerung des ersten Rahmenteils 35 an. Trotz der höheren Schnittkräfte wird eine Verformung des Rahmens verhindert, indem hydraulisch dafür gesorgt wird, dass die Längen der Zylinder 1, 2 immer gleich sind, bzw. die Zylinder 1, 2 gleichlaufend verstellt werden. Dadurch können die Zylinder 66 die Schnittkraft erheblich erhöhen, ohne dass zusätzliche Vorrichtungen neben diesen Zylindern 66 erforderlich sind. Bei den Zylindern 66 handelt es sich um einfache Hydraulikzylinder, die untereinander etwa gleich große zusätzliche Kräfte ausüben, so dass die Abmessungen der Zylinder 1, 2 begrenzt bleiben können.

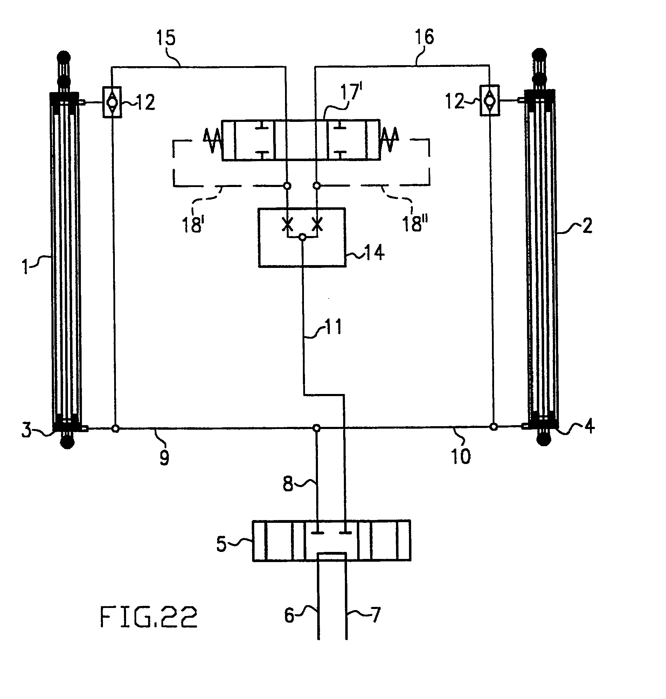

In Fig. 22 ist dem Stromteiler 14 in den Arbeitsleitungen 15, 16 ein Kompensations-Regel- oder Steuerventil 17' nachgeordnet, z.B. ein 4/3-Wegesteuerventil mit federzentrierter durchgängiger Neutralstellung und beiderseitiger hydraulischer Ansteuerung. Die Steueranschlüsse des Ventils 17' sind über Pilotleitungen 18', 18'' an die Arbeitsleitungen 15, 16 angeschlossen. Arbeitet z.B. beim Silageschneiden Zylinder 1 gegen einen niedrigeren Gegendruck als Zylinder 2, dann wird das Ventil 17' nach links verstellt und der Druckmittelstrom in der Arbeitsleitung 15 ggfs. bis zur vollständigen Absperrung gedrosselt. Der Zylinder 1 kann nicht gegenüber dem Zylinder 2 voreilen.

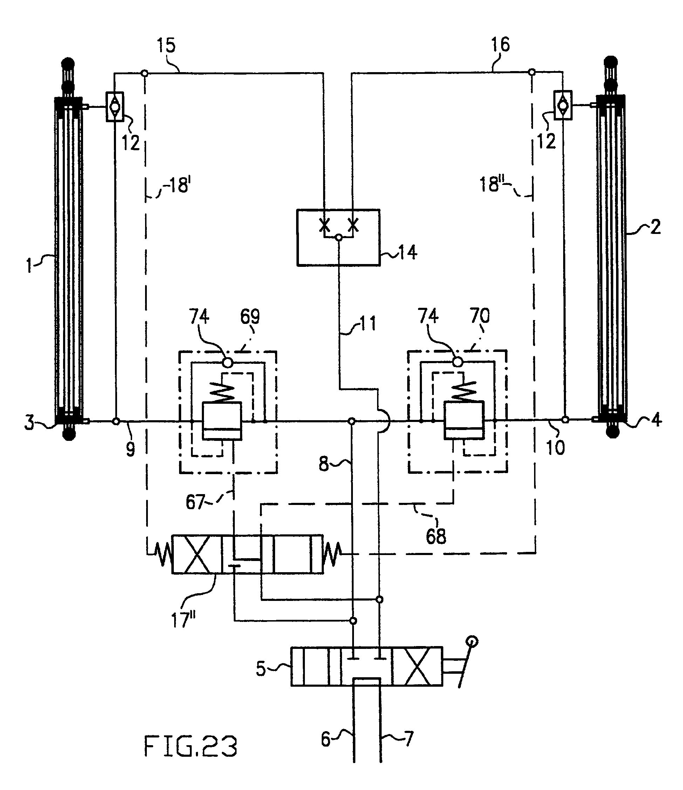

In Fig. 23 ist ein Kompensations-Steuerventil 17'', z.B. ein 4/3-Wegesteuerventil mit federzentrierter Neutralstellung, in der zwei Steuerleitungen 67, 68 miteinander und mit der gemeinsamen Druckmittelzuführleitung 11 verbunden sind, und hydraulischer gegenseitiger Ansteuerung aus den Pilotleitungen 18', 18'' eines von den Arbeitsleitungen 15, 16 abzweigenden Pilotkreises gezeigt. Der zweite Einlass des Ventils 17'' ist an die Abströmleitung 8 beim Silageschneiden zum Richtungssteuerventil 5 angeschlossen. In den Leitungen 9, 10 sind Bremsventile 69, 70 vorgesehen, z.B. gegen Federdruck von Steuerdrücken seitens des jeweiligen Zylinders und/oder in der Steuerleitung 67, 68 entsperrbare Druckbegrenzungsventile. Jedes Ventil 69, 70 wird im Beipass von einem Rückschlagventil 74 umgangen, das in Zuströmrichtung zu den kolbenseitigen Kammern der Zylinder 1, 2 (Richtungssteuerventil 5 nach rechts verstellt) öffnet. Wird das Richtungssteuerventil 5 nach links verstellt (Schneidstellung), dann werden beide Bremsventile 69, 67 aus der Druckmittelzuführleitung 11, das Ventil 17'' in der gezeigten Stellung und die Steuerleitungen 67, 68 in ihren Durchgangsstellungen gehalten, solange zwischen den Arbeitsleitungen 15, 16 keine nennenswerte Druckdifferenz (etwa entsprechend der Kraft der Zentrierfedem des Ventils 17') auftritt. Kein Zylinder wird abströmseitig gebremst. Wird der Druck in der Arbeitsleitung 16 höher als in der Arbeitsleitung 15, dann wird aus der Pilotleitung 18'' das Kompensations-Steuerventil 17'' nach links verstellt. Das Bremsventil 70 wird über die Steuerleitung 68 aus der Druckmittelzuführleitung 11 offen gehalten. Das Bremsventil 69 wird über die Steuerleitung 67 zur Abflussleitung 7 entlastet und von seiner Feder in der Absperrstellung oder einer Drosselstellung gehalten. Der Zylinder 1, der gerade gegen niedrigeren Gegendruck arbeitet, wird abströmseitig gebremst und zum Gleichlauf mit dem gerade gegen höheren Gegendruck arbeitenden Zylinder 2 gezwungen.

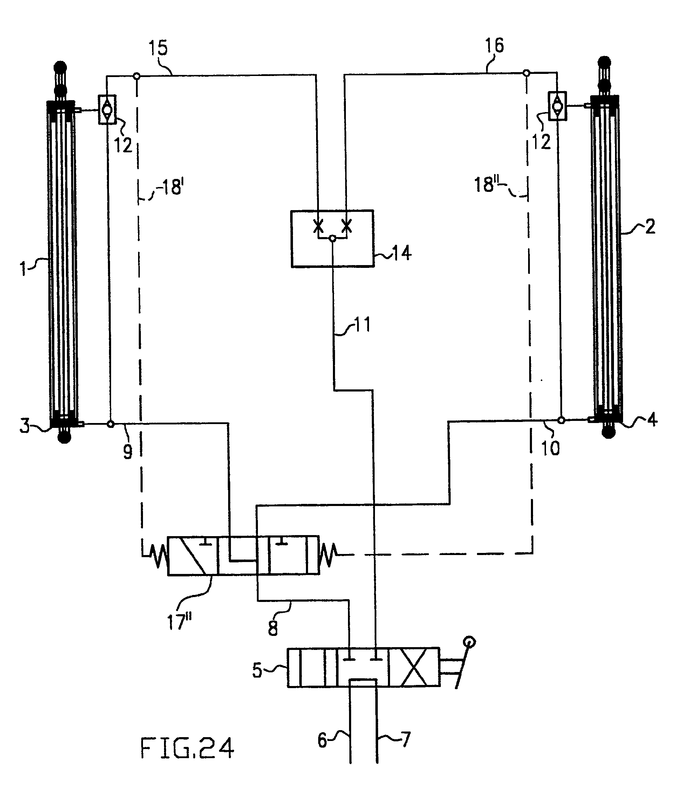

In Fig. 24 ist das Kompensations-Steuerventil direkt zwischen den Leitungen 9, 10 und der Abströmleitung 8 zum Richtungs-Steuerventil 5 vorgesehen und aus den Pilotleitungen 18', 18'' gesteuert. Solange beim Silageschneiden keine nennenswerte Druckdifferenz zwischen den Arbeitsleitungen 15, 16 stromab des Stromteilers 14 entsteht, greift das Ventil 17'' nicht ein. Erst bei Entstehen einer Druckdifferenz vorbestimmter Größe bremst das Ventil 17'' den gerade gegen niedrigeren Gegendruck arbeitenden Zylinder 1 oder 2 an der Abströmseite, bis die Druckdifferenz zwischen den Arbeitsleitungen wieder ausgeglichen ist.

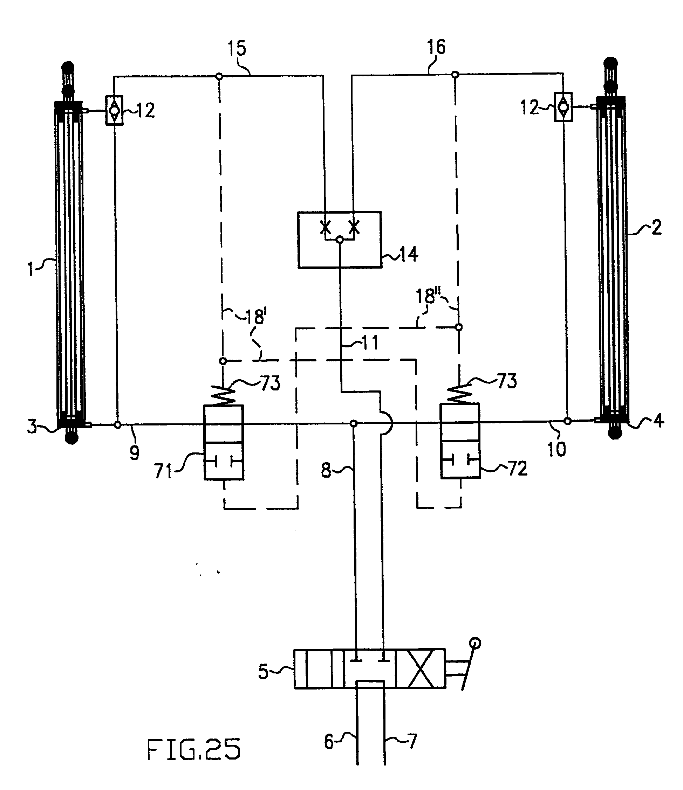

In Fig. 25 sind in den (beim Silageschneiden) abströmseitigen Leitungen 9, 10 Vorspann-Regefventile 71, 72 angeordnet, die aus den Arbeitsleitungen 15, 16 über die Pilotleitungen 18', 18 überkreuz gesteuert werden. Jedes Vorspann-Ventil 72 ist zwischen einer Durchgangs- und einer Absperrstellung, z.B. graduell, verstellbar und wird von einer Feder 73 und dem Druck in seiner Pilotleitung 18' oder 18'' in die Durchgangsstellung gedrückt. Aus der jeweils anderen Pilotleitung 18'' oder 18' kann es hingegen bei Auftreten einer bestimmten Druckdifferenz zwischen den Arbeitsleitungen und zumindest beim Silageschneiden in Richtung zu seiner Absperrstellung verstellt werden. Der jeweils gegen den niedrigeren Gegendruck arbeitende Zylinder 1 oder 2 wird dann abströmseitig gebraucht oder vorgespannt, bis die Druckdifferenz zwischen den Arbeitsleitungen wieder ausgeglichen ist. Grundsätzlich teilt der Stromteiler 14 jedem Zylinder die gleiche Druckmittelmenge pro Zeit unabhängig vom Gegendruck jedes Zylinders 1, 2 zu, damit die Zylinder sich im Gleichlauf bewegen. Jedoch könnte ggfs. vorübergehend aufgrund von Fertigungs- oder Funktionstoleranzen dennoch zu einer Tendenz zu Abweichungen kommen, die die zusätzlichen Steuer- und Regelkomponenten der Fig. 22 bis 25 kompensieren.

## Patentansprüche

1. Vorrichtung zum Silageschneiden, mit einem Rahmen aus einem ersten, ein angebrachtes Messer aufweisenden Rahmenteil (35) und einem zweiten, mit Greifvorrichtungen (38) zum Greifen der Silage versehenen Rahmenteil (37), von denen der erste Rahmenteil (35) um eine Gelenkachse (39) zwischen einer Schneidbereitschaftsstellung und einer Schneidendstellung drehbar am zweiten Rahmenteil (37) abgestützt ist, und mit Antriebsmechanismen zum Bewegen der ersten und zweiten Rahmenteile relativ zueinander, **dadurch gekennzeichnet, dass** die Antriebsmechanismen zwei Kolben (3, 4) enthaltende hydraulische Zylinder (1, 2) umfassen, die jeweils am ersten und am zweiten Rahmenteil (35, 37) angelenkt sind, dass eine hydraulische Vorrichtung vorgesehen ist, mit der zumindest beim Silageschneiden für beide hydraulische Zylinder (1, 2) jeweils die gleiche Länge bzw. Gleichlauf einstellbar ist, dass der Abstand zwischen der Gelenkachse (39) und dem am weitesten von der Gelenkachse (39) entfernten Teil der Greifvorrichtungen (38) größer ist als der Abstand zwischen der Gelenkachse (39) und dem Messer (36), und dass in der Schneidendstellung die Kolben (3, 4) beider hydraulischer Zylinder (1, 2) eingefahren sind.

2. Vorrichtung nach Anspruch 1, **dadurch gekennzeichnet, dass** die hydraulischen Zylinder (1, 2) in den Antriebsmechanismen hydraulisch in Reihe geschaltet sind, derart, dass das Hydraulikmedium von einem Zylinder jeweils zu dem anderen geleitet wird, wobei, vorzugsweise, beide Zylinder (1, 2) kolbenseitige und kolbenstangenseitige Kammern aufweisen und die aktive Querschnittsfläche an der Kolbenstangenseite des einen Zylinders zumindest weitgehend der aktiven Querschnittsfläche an der Kolbenseite des anderen Zylinders entspricht, um in der Reihenschaltung der beiden Zylinder (1, 2) gleiche Verstellgeschwindigkeiten einzustellen.

3. Vorrichtung, nach Anspruch 1, **dadurch gekennzeichnet, dass** die hydraulischen Zylinder (1, 2) in den Antriebsmechanismen gleich dimensioniert und hydraulisch parallel geschaltet sind.

4. Vorrichtung nach einem der Ansprüche 2 und 3, **dadurch gekennzeichnet, dass** einstellbare Höchstdruck- oder Differenzdruck- Begrenzungsventile (17, 19, 27, 28) vorgesehen sind, die den höchstmöglichen Druck in jedem Zylinder (1, 2) oder den höchstmöglichen Differenzdruck zwischen den Zylindern (1, 2) auf einen eingestellten Wert beschränken.

5. Vorrichtung nach Anspruch 1, **dadurch gekennzeichnet, dass** der Abstand zwischen der Gelenkachse (39) und der Anlenkstelle (46, 58) der Zylinder (1, 2) am ersten Rahmenteil (35) größer ist als die Hälfte des Abstandes zwischen der Gelenkachse (39) und der Messer (36), vorzugsweise größer ist als zwei Drittel, besonders vorzugsweise größer ist als drei Viertel dieses Abstandes.

6. Vorrichtung nach Anspruch 1, **dadurch gekennzeichnet, dass** der Abstand zwischen der Gelenkachse (39) und der Anlenkstelle jedes Zylinders (1, 2) am zweiten Rahmenteil (37) größer ist als die Hälfte des Abstandes zwischen der Gelenkachse (39) und den Greifvorrichtungen (38), vorzugsweise größer ist als zwei Drittel, besonders vorzugsweise größer ist als drei Viertel dieses Abstandes.

7. Vorrichtung nach Anspruch 1, **dadurch gekennzeichnet, dass** der erste Rahmenteil (35) mindestens ein Seitenmesser (47) aufweist, das zumindest in etwa senkrecht zum Messer (36) sich und/oder zumindest in etwa radial zur Gelenkachse (39) ausgerichtet ist.

8. Vorrichtung nach Anspruch 7, **dadurch gekennzeichnet, dass** jedes Seitenmesser (47) eine gebogene, vorzugsweise konvex gebogene, Schnittfläche besitzt.

9. Vorrichtung nach wenigstens einem der Ansprüche 1 bis 8, **dadurch gekennzeichnet, dass** das Messer (36) und/oder das Seitenmesser (47) eine Schnittkante besitzt, die gerändelt oder gewellt ist und Teile aufweist, die zueinander in einem bestimmten Winkel stehen.

10. Vorrichtung nach Anspruch 9, **dadurch gekennzeichnet, dass** der Abstand nach unten reichender Punkte der Schnittkante kleiner als 8 cm ist, vorzugsweise kleiner als 6 cm, oder besonders vorzugsweise kleiner als 4 cm.

11. Vorrichtung gemäß Anspruch 1, **dadurch gekennzeichnet, dass** das Messer (36) eine Metallplatte mit einer randseitigen, eine Schnittkante bildenden Abschrägung (30) an der der Gelenkachse (39) abgewandten Plattenseite ist.

12. Vorrichtung nach einem der Ansprüche 1 bis 11, **dadurch gekennzeichnet, dass** der zweite Rahmenteil (37) eine zur Zusammenarbeit mit dem Messer (36) und/oder jedem Seitenmesser (47) ausgebildete Schneidevorrichtung (43) aufweist.

13. Vorrichtung gemäß Anspruch 12, **dadurch gekennzeichnet, dass** die Schneidevorrichtung (43) eine Gegenkante, vorzugsweise für einen scherenartigen Schnitt, mit der Schnittkante des Messers (36) oder des Seitenmessers (47) aufweist.

14. Vorrichtung gemäß einem der Ansprüche 12 oder 13, **dadurch gekennzeichnet, dass** die Schneidevorrichtung (43) eine Eintauch-Rille für die Schnittkante des Messers (36) oder des Seitenmesser (47) aufweist.

15. Vorrichtung gemäß Anspruch 1, **dadurch gekennzeichnet, dass** die Greifvorrichtungen (38) einen plattenförmigen Teil mit einer in einen Siloblock eindrückbaren scharfen Kante oder Verzahnung aufweisen.

16. Vorrichtung gemäß Anspruch 1, **dadurch gekennzeichnet, dass** der Abstand zwischen mindestens ca. 5 cm und ca. 15 cm beträgt.

17. Vorrichtung nach Anspruch 1, **dadurch gekennzeichnet, dass** der erste und/oder zweite Rahmenteil (35, 37) Führungsmechanismen (48, 49) für wenigstens ein Teilelement des zweiten bzw. ersten Rahmenteils und zum Querabstützen der Rahmenteile gegen Bewegungen und/oder Verformungen der Gelenkachse (39) aufweisen.

18. Vorrichtung gemäß Anspruch 17, **dadurch gekennzeichnet, dass** die Führungsmechanismen (48, 19) mit einem Begrenzungs-Anschlag (48) für die Relativbewegung zwischen den ersten und zweiten Rahmenteilen (35, 37) versehen sind.

19. Vorrichtung nach wenigstens einem der Ansprüche 1 bis 18, **dadurch gekennzeichnet, dass** eine Silage-Ablage-Mischkammer (34) mit einer Mischkammerwand vorgesehen ist, und dass vorzugsweise, der zweite Rahmenteil (37) einen Teil der Mischkammerwand bildet.

20. Vorrichtung nach Anspruch 19, **dadurch gekennzeichnet, dass** der zweite Rahmenteil (37) mit einem Gelenk (40) kippbar an der Silage-Ablage-Mischkammer (34) befestigt.

21. Vorrichtung nach wenigstens einem der Ansprüche 1 bis 19, **dadurch gekennzeichnet, dass** der zweite Rahmenteil (37) fest mit der Mischkammer (34) verbunden ist und eine Verlängerung deren Boden bildet, dass der erste Rahmenteil je einen um die Gelenkachse (39) an der Mischkammer (34) schwenkbaren Arm (56) und eine Ladeklappe (57) aufweist, an deren unterer Kante das Messer (36) befestigt ist, und dass die Ladeklappe (57) relativ zu den Armen (56) in einem Gelenk (58) oder in einem Schiebemechanismus beweglich ist.

22. Vorrichtung gemäß Anspruch 1, **dadurch gekennzeichnet, dass** die Vorrichtung auf Boden-Stützrädern (32) in etwa in vertikaler Richtung auf- und abbewegbar ist.

23. Vorrichtung nach wenigstens einem der Ansprüche 1 bis 21, **dadurch gekennzeichnet, dass** an der Mischkammer (34) der zweite Rahmenteil (37) mit zwei hydraulischen Zylindern (41) relativ schwenkbar abgestützt ist, und dass in den Beaufschlagungsleitungen der Zylinder (41) Steuerventile, z. B. Rückschlagventile, vorgesehen sind, mit denen die Wirklänge beider Zylinder (41) zumindest vorübergehend fixierbar ist.

24. Vorrichtung nach Anspruch 3, **dadurch gekennzeichnet, dass** zum Einstellen jeweils gleicher Längen der beiden, parallel geschalteten hydraulischen Zylinder (1, 2) ein hydraulischer Stromteiler (14) für untereinander gleiche Druckmittelströme zwischen einer gemeinsamen Druckmittelzuführleitung (11) und Arbeitsleitungen (15, 16) zu den in Schneidrichtung beaufschlagbaren, z.B. kolbenstangenseitigen Kammern der Zylinder (1, 2) vorgesehen ist.

25. Vorrichtung nach Anspruch 24, **dadurch gekennzeichnet, dass** zwischen den Arbeitsleitungen (15, 16) ein Druckdifferenz-Abtastventil (17) vorgesehen ist, das über eine Pilotleitung (18) mit der Zusteuerseite eines als Ausgleichsventil (19) zwischen der Druckmittelzuführleitung (11) und einer mit einer Abflussleitung (7) verbindbaren Abströmleitung (8) beider Zylinder (1, 2) vorgesehenen Druckbegrenzungsventils verbunden ist, und dass dieses Ausgleichsventil (19) aufsteuerseitig und gegen Federkraft aus der Druckversorgungsleitung (11) vorgesteuert ist und als ein Differenzdruck-Begrenzungsventil zwischen den Arbeitsleitungen (15, 16) wirkt.

26. Vorrichtung nach Anspruch 2, **dadurch gekennzeichnet, dass** zwischen den in Reihe geschalteten hydraulischen Zylindern (1, 2) zwei je einen Zylinder (1, 2) überwachende, als vorgesteuerte Druckbegrenzungsventile ausgebildete Ausgleichsventile (27, 28) mit Höchstdruckbegrenzungsfunktion zur Abflussleitung (7) vorgesehen sind.

27. Vorrichtung nach Anspruch 24, **dadurch gekennzeichnet, dass** direkt in den Arbeitsleitungen (15, 16) zwischen dem Stromteiler (14) und den in Schneidrichtung beaufschlagbaren Kammern der Zylinder (1, 2) ein auf eine Druckdifferenz zwischen den Arbeitsleitungen (15, 16) ansprechendes Kompensations-Regelventil (17'), vor zugsweise ein in seiner Neutralstellung durchgängiges, in jeder Kompensationsstellung die den jeweils niedrigeren Druck aufweisende Arbeitsleitung (15, 16) bis zur Blockage abdrosselndes Mehrwege-Mehrstellungs-Ventil, vorgesehen ist.

28. Vorrichtung nach Anspruch 24, **dadurch gekennzeichnet, dass** ein zu den beitsleitungen (15, 16) paralleler Pilotkreis (18', 18") ein Kompensations-Steuerventil (17'') steuert, das in Vorsteuerwegen (67, 68) zwischen der Druckmittelzuführleitung bzw. einer Abflussleitung (8) und je einem beim Silageschneiden abströmseitig jedes Zylinders (1, 2) vorgesehenen, vorzugsweise durch den Abströmdruck gegen Federkraft vorgesteuerten Bremsventil (69, 70) angeordnet ist, das den beim Silageschneiden gegen niedrigeren Gegendruck arbeitenden Zylinder (1, 2) bremst.

29. Vorrichtung nach Anspruch 24, **dadurch gekennzeichnet, dass** ein zu den Arbeitsleitungen (15, 16) paralleler Pilotkreis (18', 18'') ein Kompensations-Steuerventil (17'') steuert, das zwischen beim Silageschneiden abströmseitigen Leitungen (9, 10) und einer gemeinsamen Abflussleitung (8) angeordnet ist, und abhängig von einer Druckdifferenz zwischen den Arbeitsleitungen (15, 16) den gegen einen niedrigeren Gegendruck arbeitenden Zylinder (1, 2) bremst.

30. Vorrichtung nach Anspruch 24, **dadurch gekennzeichnet, dass** ein zu den Arbeitsleitungen (15, 16) paralleler Pilotkreis (18', 18'') vorgesehen ist, der Druckdifferenzen zwischen den Arbeitsleitungen (15, 16) abtastet, dass in jeder beim Silageschneiden abströmseitigen Leitung (9, 10) jedes Zylinders (1, 2) zur gemeinsamen Abflussleitung (8) ein zwischen einer federbedingten Durchgangsstellung und einer Absperrstellung verstellbares Vorspann-Regelventil (71, 72) angeordnet ist, das beim Silageschneiden parallel zur Feder (73) über den Pilotkreis (18', 18) mit Pilotdruck seines zugehörigen Zylinders in Richtung auf die Durchgangsstellung und mit Pilotdruck des jeweils anderen Zylinders in Richtung auf die Absperrstellung beaufschlagt ist, derart, dass der jeweils gegen einen niedrigeren Gegendruck arbeitende Zylinder (1, 2) abströmseitig gebremst wird.

## Claims

1. Device for cutting silage, the device comprising a frame which consists of a first frame member having attached thereto a knife and a second frame member provided with gripping devices for gripping the silage, said first frame member being supported on said second frame member such that it is rotatable about a hinge axle, and further comprising drive mechanisms for moving said first and second frame members relative to each other, **characterised in that** the drive mechanisms comprise two hydraulic cylinders (1, 2) each of which is articulated on said first and second frame members (35, 37), the hydraulic cylinders containing pistons (3, 4) that a hydraulic device is provided by means of which the same length and synchronous movement is controlled for both hydraulic cylinders (1, 2) at least during a silage cutting operation, that the distance between the hinge axle (39) and the part of the gripping devices (38) which is most remote from said hinge axle (39) is larger than the distance between the hinge axle (39) and the knife (36), and that the pistons (3, 4) of both hydraulic cylinders (1, 2) are retracted when a cutting end position is reached.

2. Device according to claim 1, **characterised in that** the hydraulic cylinders (1, 2) in the drive mechanisms are hydraulically connected in series such that the hydraulic medium from one cylinder is conducted to the respective other cylinder, that both cylinders (1, 2) have piston-side and piston-rod-side chambers with the active cross-sectional surface on the piston-rod side of one cylinder corresponding, at least to a large extent, to the active cross-sectional surface on the piston side of the other cylinder so as to control equal adjustment speeds of the two serially connected cylinders (1, 2).

3. Device according to claim 1, **characterised in that** the hydraulic cylinders (1, 2) in the drive mechanism are identically dimensioned and are hydraulically connected in parallel.

4. Device according to one of claims 2 and 3, **characterised in that** adjustable maximum-pressure or differential-pressure limiting valves (17, 19, 27, 28) are provided, which limit the maximum possible pressure in each cylinder (1, 2) or the maximum possible differential pressure between the cylinders (1, 2) to a set value.

5. Device according to claim 1, **characterised in that** the distance between the hinge axle (39) and the articulation point (46, 58) of the cylinders (1, 2) at the first frame member (35) is larger than the half of the distance between the hinge axle (39) and the knife (36), preferably is larger than two thirds, most preferably is larger than three quarters of this distances.

6. Device according to claim 1, **characterised in that** the distance between the hinge axle (39) and the articulation point of each cylinder (1, 2) on the second frame member (37) is larger than the half of the distance between the hinge axle (39) and the gripping devices (38), preferably is larger than two thirds, most preferably is larger than three quarters of this distance.

7. Device according to claim 1, **characterised in that** the first frame member (35) is provided with at least one side-knife (47) which is oriented at least approximately at right angles to the knife (36) and/or at least approximately radially to the hinge axle (39).

8. Device according to claim 7, **characterised in that** each side-knife (47) has a curved, preferably a convex cutting surface.

9. Device according to at least one of the claims 1 to 8, **characterised in that** the knife (36) and/or the side-knife (47) have/has a cutting edge which is knurled or wavy and which includes parts that extend at a specific angle relative to one another.

10. Device according to claim 9, **characterised in that** the distance between downwardly extending portions of the cutting edge is smaller than 8 cm, preferably is smaller than 6 cm, or most preferably is smaller than 4 cm.

11. Device according to claim 1, **characterised in that** the knife (36) is a metal plate provided with an edge-side bevel (30) on the side of the plate facing away from the hinge axle (39), said bevel (30) defining a cutting edge.

12. A device according to one of the claims 1 to 11, **characterised in that** the second frame member (37) is provided with a cutting device (43) which is implemented such that it is adapted to co-operate with the knife (36) and/or the side-knife (47).

13. Device according to claim 12, **characterised in that** the cutting device (43) is provided with a counteredge, preferably for a scissorlike cut with the cutting edge of the knife (36) or of the side-knife (47).

14. Device according to one of the claims 12 or 13, **characterised in that** the cutting device (43) is provided with a recessed groove for the cutting edge of the knife (36) or of the side-knife (47).

15. Device according to claim 1, **characterised in that** the gripping devices (38) comprise a plate-like member provided with a sharp edge or teeth which is/are adapted to be pressed into a silage block.

16. Device according to claim 1, **characterised in that** the differential distance range between at least approx. 5 cm and approx. 15 cm.

17. Device according to claim 1, **characterised in that** the first and/or second frame member(s) (35, 37) is/are provided with guide mechanisms (48, 49) for guiding at least a sub-element of said second or said first frame member, respectively, and for transversely supporting the frame members against movements and/or deformations of the hinge axle (39).

18. Device according to claim 17, **characterised in that** the guide mechanisms (48, 49) are provided with a limiting stop (48) for limiting the relative movement between said first and said second frame members (35, 37).

19. Device according to at least one of the claims 1to 18, **characterised in that** a silage storage/mixing chamber (34) comprising a mixing chamber wall is provided, and that, preferably, the second frame member (37) defines a part of said mixing chamber wall.

20. Device according to claim 19, **characterised in that** the second frame member (37) is tiltably secured to the silage deposit/mixing chamber (34) by means of a joint (40).

21. Device according to at least one of the claims 1 to 19, **characterised in that** the second frame member (37) is fixedly connected to the mixing chamber (34) and forms an extension of the bottom of the mixing chamber, that the first frame member comprises respective arms (56), each of which is pivotable about the hinge axle (39), on the mixing chamber (34), that the second frame member is provided with a loading flap (57) having the knife (36) secured to the lower edge thereof, and that the loading flap (57) is movable relative to said arms (56) in a joint (58) or in a sliding mechanism.

22. Device according to claim 1, **characterised in that** said silage cutter is adapted to be moved up and down on ground support wheels (32) in an approximately vertical direction.

23. Device according to at least one of the claims 1 to 21, **characterised in that** the second frame member (37) is supported at the mixing chamber (34) by two hydraulic cylinders (41) such that it is pivotable relative to said mixing chamber, and that controls valves, e.g. check valves, are provided in the supply lines to the cylinders (41) by means of which the effective length of both cylinders (41) can be fixed at least temporarily.

24. Device according to claim 3, **characterised in that** for adjusting respective identical lengths of two parallelly connected hydraulic cylinders (1, 2) a hydraulic flow divider (14) is provided for generating identical pressure medium flows between a common pressure-medium supply line (11) and operating lines (15, 16) leading to the e.g. piston-rod-side chambers of the cylinders (1, 2) which chambers serve to be pressurised in cutting direction.

25. Device according to claim 24, **characterised in that** a pressure-difference sensing valve (17) is provided between the operating lines (15, 16), the valve (17) being connected via a pilot line (18) to the closing side of a pressure-limiting valve which is provided as an equalising valve (19) between the pressure-medium supply line (11) and a discharge line (8) of both cylinders (1, 2), said discharge line (8) being adapted to be connected to a discharge line (7), and that this equalising valve (19) is pilot-controlled from the side of the pressure-supply line (11) in opening direction against the force of a spring and acts a a differential-pressure limiting valve between the operating lines (15,16).

26. Device according to claim 2, **characterised in that** two equalising valves (27, 28) each controlling one cylinder (1, 2) are provided between the serially-connected hydraulic cylinders (1, 2) which valves are implemented as pilot-controlled pressure-limiting valves, said equalising valves (27, 28) having a maximum-pressure limiting function towards the discharging line (7).

27. Device according to claim 24, **characterised in that** a compensating control valve (17') responding to a pressure difference between the operating lines (15, 16) is provided directly in the operating lines (15, 16) and between the flow divider (14) and the cylinder chambers which serve for being pressurised in cutting direction, the compensating control valve (17') being, preferably, a multi-way/multi-position valve which is open in a neutral position and a which, at each compensating position, throttles fluid flow up to a blockage of the operating line (16) which contains the relative lower pressure.

28. Device according to claim 24, **characterised in that** a pilot circuit (8, 18") which is connected in parallel to the operating lines (15, 16), controls a compensating control valve (17") which is arranged in pilot-control paths (67, 68) between the pressure-medium supply line or a discharge line (8), respectively, and a respective brake valve (69, 70) which is provided on the discharge side of each silage cutting cylinder (1, 2) and which is, preferably, pilot controlled by the discharge pressure against the force of a spring, the brake valve (69, 70) retarding the respective cylinders (1, 2) which operates during silage cutting against the lower counterpressure.

29. Device according to claim 24, **characterised in that** a pilot circuit (18', 18"), which is connected in parallel to the operating lines (15, 16) controls a compensating control valve (17"), which is arranged between lines (9, 10) which contain discharged fluid during a silage cutting operation and a common discharge line (8), and which retards the cylinder (1, 2) operating against the lower counterpressure in response to a pressure difference between the operating lines (15, 16).

30. Device according to claim 24, **characterised in that** a pilot circuit (18, 18") is provided in parallel to the operating lines (15, 16) for sensing pressure differences between the operating lines (15, 16) that a hydraulically biasing control valve (71, 72) is provided in each silage cutting discharge line (9, 10) of each cylinder (1, 2) leading to the common discharge line which control valve is adapted to be displaced between a spring-controlled open position and a blocking position, and which, during silage cutting, is pressurised parallel to the force of the spring (73) via the pilot circuit (18', 18) with pilot pressure of its associated cylinder in the direction towards the open position and is pressurised by pilot pressure originating from the respective other cylinder in the direction towards the blocking position such that the respective cylinder (1, 2) operating against the lower counterpressure is retarded from the discharge side.

## Revendications

1. Dispositif pour couper le fourrage ensilé, comportant un bâti constitué d'une première partie de bâti (35) présentant un couteau rapporté et une deuxième partie de bâti (37) pourvue de dispositifs préhenseurs (38) pour saisir le fourrage ensilé, dont la première partie de bâti (35) est supportée de manière rotative sur la deuxième partie de bâti (37) autour d'un axe d'articulation (39) entre une position de préparation de coupe et une position de fin de coupe, et comportant des mécanismes d'entraînement, pour déplacer les première et deuxième parties de bâti l'une par rapport à l'autre, **caractérisé en ce que** les mécanismes d'entraînement comprennent deux vérins hydrauliques (1, 2) contenant des pistons (3, 4), qui sont chacun articulés sur la première et la deuxième parties de bâti (35, 37), qu'un dispositif hydraulique est prévu, à l'aide duquel il est possible au moins lors de la coupe du fourrage ensilé de régler pour les deux vérins hydrauliques (1, 2) respectivement la même longueur ou la même course, que la distance entre l'axe d'articulation (39) et la partie des dispositifs préhenseurs (38) la plus éloignée de l'axe d'articulation (39) est supérieure à la distance entre l'axe d'articulation (39) et le couteau (36) et que, dans la position de coupe, les pistons (3, 4) des deux vérins hydrauliques (1, 2) sont rentrés.

2. Dispositif selon la revendication 1, **caractérisé en ce que** les vérins hydrauliques (1, 2) sont montés hydrauliquement en ligne dans les mécanismes d'entraînement, de telle manière que le fluide hydraulique est amené chaque fois d'un vérin à l'autre, les deux vérins (1, 2) présentant de préférence des chambres du côté piston et du côté tige de piston et les surfaces transversales actives sur le côté de la tige de piston de l'un des cylindres correspondant au moins largement à la surface transversale active du côté du piston de l'autre vérin, afin de régler les mêmes vitesses de déplacement dans le montage en ligne des deux vérins (1, 2).

3. Dispositif selon la revendication 1, **caractérisé en ce que**, dans les mécanismes d'entraînement, les vérins hydrauliques (1, 2) sont dimensionnés de manière égale et sont montés hydrauliquement en parallèle.

4. Dispositif selon l'une des revendications 2 et 3,
**caractérisé en ce que** sont prévues des vannes (17, 19, 27, 28) de limitation de pression maximale ou de différentiel de pression, qui limitent à une valeur réglée la pression maximale possible dans chaque vérin (1, 2) ou le différentiel de pression maximal possible entre les vérins (1, 2).

5. Dispositif selon la revendication 1, **caractérisé en ce que** la distance entre l'axe d'articulation (39) et le point d'articulation (46, 58) des vérins (1, 2) sur la première partie de bâti (35) est supérieure à la moitié de la distance entre l'axe d'articulation (39) et le couteau (36), de préférence est supérieure à deux tiers, de manière particulièrement préférée est supérieure à trois quarts de cette distance.

6. Dispositif selon la revendication 1, **caractérisé en ce que** la distance entre l'axe d'articulation (39) et le point d'articulation de chaque vérin (1, 2) sur la deuxième partie de bâti (37) est supérieure à la moitié de la distance entre l'axe d'articulation (39) et les dispositifs préhenseurs (38), de préférence est supérieure à deux tiers, de manière particulièrement préférée est supérieure à trois quarts de cette distance.

7. Dispositif selon la revendication 1, **caractérisé en ce que** la première partie de bâti (35) comporte au moins un couteau latéral (47) qui est orienté au moins sensiblement à la perpendiculaire du couteau (36) et/ou est orienté au moins sensiblement radialement par rapport à l'axe d'articulation (39).

8. Dispositif selon la revendication 7, **caractérisé en ce que** chaque couteau latéral (47) possède une surface de coupe courbe, de préférence courbe de manière convexe.

9. Dispositif selon l'une au moins des revendications 1 à 8, **caractérisé en ce que** le couteau (36) et/ou le couteau latéral (47) possède une arête de coupe qui est bordée ou ondulée et présente des parties qui forment un certain angle les unes par rapport aux autres.

10. Dispositif selon la revendication 9, **caractérisé en ce que** la distance de points de l'arête de coupe orientés vers le bas est inférieure à 8 cm, de préférence inférieure à 6 cm, ou de manière particulièrement préférée inférieure à 4 cm.

11. Dispositif selon la revendication 1, **caractérisé en ce que** le couteau (36) est une plaque métallique comportant, sur le côté de plaque détourné de l'axe d'articulation (39), un biseau (30) du côté du bord, formant une arête de coupe.

12. Dispositif selon l'une des revendications 1 à 11,
**caractérisé en ce que** la deuxième partie de bâti (37) comporte un dispositif de coupe (43) réalisé pour coopérer avec le couteau (36) et/ou chaque couteau latéral (47).

13. Dispositif selon la revendication 12, **caractérisé en ce que** le dispositif de coupe (43) comporte une contre-arête, de préférence pour une coupe du genre cisaillement avec l'arête de coupe du couteau (36) ou du couteau latéral (47).

14. Dispositif selon l'une des revendications 12 ou 13, **caractérisé en ce que** le dispositif de coupe (43) comporte une rainure d'enfoncement pour l'arête de coupe du couteau (36) ou du couteau latéral (47).

15. Dispositif selon la revendication 1, **caractérisé en ce que** les dispositifs préhenseurs (38) comportent une partie en forme de plaque présentant une arête ou denture acérée pouvant être enfoncée dans un bloc de silo.

16. Dispositif selon la revendication 1, **caractérisé en ce que** la distance s'élève entre au moins 5 cm environ et 15 cm environ.

17. Dispositif selon la revendication 1, **caractérisé en ce que** la première et/ou la deuxième partie de bâti (35, 37) comporte des mécanismes de guidage (48, 49) pour au moins un élément partiel de la première et/ou la deuxième partie de bâti et pour le support transversal des parties de bâti contre les mouvements et/ou les déformations de l'axe d'articulation (39).

18. Dispositif selon la revendication 17, **caractérisé en ce que** les mécanismes de guidage (48, 49) sont pourvus d'une butée de limitation (48) pour le déplacement relatif entre les première et deuxième parties de bâti (35, 37).

19. Dispositif selon l'une des revendications 1 à 18,
**caractérisé en ce qu'**une chambre (34) réceptrice de mélange de fourrage ensilé est pourvue d'une paroi de chambre de mélange et que de préférence la deuxième partie de bâti (37) constitue une partie de la paroi de chambre de mélange.

20. Dispositif selon la revendication 19, **caractérisé en ce que** la deuxième partie de bâti (37) est fixée de manière basculante à la chambre réceptrice de mélange de fourrage ensilé (34), par l'intermédiaire d'une articulation (40).

21. Dispositif selon l'une au moins des revendication 1 à 19, **caractérisé en ce que** la deuxième partie de bâti (37) est reliée fermement à la chambre de mélange (34) et qu'un prolongement forme le fond de celle-ci, que la première partie de bâti comporte respectivement un bras (56) pivotant autour de l'axe d'articulation (39) sur la chambre de mélange (34) et une trappe de chargement (57) à l'arête inférieure de laquelle est fixé le couteau (36), et que la trappe de chargement (57) est mobile par rapport aux bras (56) dans une articulation (58) ou dans un mécanisme coulissant.

22. Dispositif selon la revendication 1, **caractérisé en ce que** le dispositif peut être levé ou baissé dans la direction sensiblement verticale, sur des roues d'appui au sol (32).

23. Dispositif selon l'une au moins des revendications 1 à 21, **caractérisé en ce que** la deuxième partie de bâti (37) est supportée de manière relativement pivotante avec deux vérins hydrauliques (41) sur la chambre de mélange (34), et que dans les conduites de contrainte des vérins (41) sont prévues par exemple des vannes anti-retour, avec lesquelles la longueur d'action des deux cylindres (41) peut être fixée du moins provisoirement.

24. Dispositif selon la revendication 3, **caractérisé en ce que** pour régler des longueurs respectivement identiques des deux vérins hydrauliques (1, 2) montés en parallèle, un diviseur de flux hydraulique (14) est prévu, pour des flux de produit comprimé identiques entre eux, entre une conduite d'amenée de produit comprimé (11) commune et des conduites de travail (15, 16) vers les chambres des vérins (1, 2), par exemple du côté de la tige de piston, pouvant être contraintes dans la direction de coupe.

25. Dispositif selon la revendication 24, **caractérisé en ce qu'**entre les conduites de travail (15, 16) est prévue une vanne de détection de différentiel de pression (17) qui est reliée par l'intermédiaire d'une conduite pilote (18) au côté de commande de fermeture d'une vanne de limitation de pression prévue en tant que vanne de compensation (19), entre la conduite d'amenée de produit comprimé (11) et une conduite d'évacuation (8) des deux vérins (1, 2) pouvant être reliée à une conduite d'évacuation (7), et que cette vanne de compensation (19) est pilotée du côté de commande d'ouverture et contre la force de ressort émanant de la conduite d'alimentation en pression (1) et agit comme une vanne de limitation de différentiel de pression entre les conduites de travail (15, 16).

26. Dispositif selon la revendication 2, **caractérisé en ce qu'**entre les vérins hydrauliques (1, 2) montés en ligne sont prévues deux vannes de compensation (27, 28) surveillant chacune un vérin (1, 2), réalisées en vannes de limitation de pression pilotées, à fonction de limitation de pression maximale vers la conduite d'évacuation (7).

27. Dispositif selon la revendication 24, **caractérisé en ce qu'**entre le diviseur de flux (14) et les chambres des vérins (1, 2) pouvant être mises sous contrainte dans la direction de coupe est prévue directement dans les conduites de travail (15, 16) une vanne de régulation à compensation (17') répondant à un différentiel de pression entre les conduites de travail (15, 16), de préférence une vanne multiposition multivoie, à passage dans sa position neutre et étranglant jusqu'au blocage, dans chaque position de compensation, la conduite de travail (15, 16) présentant respectivement la plus basse pression.

28. Dispositif selon la revendication 24, **caractérisé en ce qu'**un circuit pilote (18', 18") parallèle aux conduites de travail (15, 16) pilote une vanne de commande à compensation (17") qui est disposée dans des trajectoires pilotes (67, 68) entre la conduite d'amenée de produit sous pression ou une conduite d'évacuation (8) et respectivement une vanne de freinage (69, 70) prévue du côté aval de chaque cylindre (1, 2), lors de la coupe du fourrage ensilé, de préférence pilotée par la pression d'évacuation contre la force de ressort, qui freine le vérin (1, 2) travaillant lors de la coupe du fourrage ensilé, contre une contre-pression plus faible.

29. Dispositif selon la revendication 24, **caractérisé en ce qu'**un circuit pilote (18', 18") parallèle aux conduites de travail (15, 16) pilote une vanne de commande à compensation (17") qui est disposée entre les conduites (9, 10) situées du côté évacuation lors de la coupe du fourrage ensilé et une conduite d'évacuation commune (8), et freine le vérin (1, 2) travaillant contre une contre-pression plus basse en fonction d'un différentiel de pression entre les conduites de travail (15, 16).

30. Dispositif selon la revendication 24, **caractérisé en ce qu'**un circuit pilote (18', 18") parallèle aux conduites de travail (15, 16) est prévu, qui détecte les différentiels de pression entre les conduites de travail (15, 16), que dans chaque conduite (9, 10) de chaque cylindre (1, 2), située du côté évacuation lors de la coupe du fourrage ensilé, vers la conduite d'évacuation commune (8) est disposée une vanne de régulation précontrainte (71, 72) pouvant être déplacée entre une position de passage soumise à un ressort et une position de blocage qui, lors de la coupe du fourrage ensilé, est contrainte parallèlement au ressort (73) par l'intermédiaire du circuit pilote (18', 18) avec la pression pilote de son vérin correspondant en direction de la position de passage et avec la pression pilote de l'autre vérin respectivement en direction de la position de blocage, de telle façon que le vérin (1, 2) travaillant respectivement contre une contre-pression plus faible est freiné du côté évacuation.
